# EUROPEAN PATENT APPLICATION

(11) **EP 4 716 247 A1**
(43) Date of publication of application: **25.03.2026**
(21) Application number: 25203073.9
(22) Date of filing: 18.09.2025
(51) Int. Cl.: H04R 1/10, G06F 1/3231, G06F 3/01

(54) **A SENSOR LOCK FEATURE FOR MIXED REALITY HEADSETS**

(30) Priority: 24.09.2024 US 202463698449 P; 03.09.2025 US 202519318056
(71) Applicant: Meta Platforms Technologies, LLC, Menlo Park, CA 94025 (US)
(72) Inventor: BRENNER, Andrew Scott, Menlo Park, 94025 (US); BRAVO, Andres, Menlo Park, 94025 (US); KUMAR, Amit Ranjan, Menlo Park, 94025 (US); CHEN, Ethan, Menlo Park, 94025 (US); DAVIDOV, Misha, Menlo Park, 94025 (US); KIMURA-THOLLANDER, Philippe, Menlo Park, 94025 (US); DOUGLAS, Jeremiha, Menlo Park, 94025 (US); CHHABRA, Daljeet Singh, Menlo Park, 94025 (US)
(74) Representative: Murgitroyd & Company

(57) **Abstract**

A method includes detecting, when a headset device is in a sensor lock engaged state, using a trusted software module of the headset device, a user presence event. An embodiment includes transitioning, using the trusted software module of the headset device, the headset device from the sensor lock engaged state to a sensor lock disengaged state, the transitioning comprising providing power to a privacy sensitive sensor of the headset device and powering on an indicator light of the headset device. An embodiment includes transitioning, using the trusted software module of the headset device, the headset device from the sensor lock disengaged state to the sensor lock engaged state, the transitioning comprising removing power from the privacy sensitive sensor of the headset device and powering off the indicator light of the headset device. Systems and computer programs for performing the method are described.

## Description

### CROSS-REFERENCE OF RELATED APPLICATION

This application claims the benefit of U.S. Provisional Application No. 63/698,449, filed on September 24, 2024, which is incorporated herein in its entirety.

### TECHNICAL FIELD

The present disclosure generally relates to mixed reality headsets, and more particularly to a sensor lock feature for mixed reality headsets.

### BACKGROUND

The term "mixed reality" or "MR" as used herein refers to a form of reality that has been adjusted in some manner before presentation to a user, which may include, e.g., virtual reality (VR), augmented reality (AR), extended reality (XR), hybrid reality, or some combination and/or derivatives thereof. Mixed reality content may include completely generated content or generated content combined with captured content (e.g., real-world photographs). The mixed reality content may include video, audio, haptic feedback, or some combination thereof, any of which may be presented in a single channel or in multiple channels (such as stereo video that produces a three-dimensional (3D) effect to the viewer). Additionally, in some embodiments, mixed reality may be associated with applications, products, accessories, services, or some combination thereof, that are, e.g., used to interact with content in an immersive application. The mixed reality system that provides the mixed reality content may be implemented on various platforms, including a head-mounted display (HMD) connected to a server, a host computer system, a standalone HMD, a mobile device or computing system, a "cave" environment or other projection system, or any other hardware platform capable of providing mixed reality content to one or more viewers. Mixed reality may be equivalently referred to herein as "artificial reality."

"Virtual reality" or "VR," as used herein, refers to an immersive experience where a user's visual input is controlled by a computing system. "Augmented reality" or "AR" as used herein refers to systems where a user views images of the real world after they have passed through a computing system. For example, a tablet with a camera on the back can capture images of the real world and then display the images on the screen on the opposite side of the tablet from the camera. The tablet can process and adjust or "augment" the images as they pass through the system, such as by adding virtual objects. AR also refers to systems where light entering a user's eye is partially generated by a computing system and partially composes light reflected off objects in the real world. For example, an AR headset could be shaped as a pair of glasses with a pass-through display, which allows light from the real world to pass through a waveguide that simultaneously emits light from a projector in the AR headset, allowing the AR headset to present virtual objects intermixed with the real objects the user can see. The AR headset may be a block-light headset with video pass-through. "Mixed reality" or "MR," as used herein, refers to any of VR, AR, XR, or any combination or hybrid thereof.

MR headsets typically include a plurality of sensors. An MR headset user typically enables one or more of the sensors, either manually (e.g., by selecting a sensor via a user interface) or automatically (e.g., when the user dons, or puts on, the headset). An MR headset user typically disables one or more of the sensors, either manually (e.g., by selecting a sensor via a user interface) or automatically (e.g., when the user doffs, or takes off, the headset). There is a chance that a sensor could be enabled without a user's knowledge or consent - for example via malware or false triggering of one or more sensors used to determine user proximity - which is an undesirable user experience. Thus, there is a need for a sensor lock feature that cuts off power to one or more headset sensors, so the sensors to which power is cut off can never be on when the user does not expect them to be, such as when the headset is not in use.

Embodiments of the present disclosure address the above identified problems by implementing a sensor lock feature for mixed reality headsets. In particular, an embodiment detects, when a headset device is in a sensor lock engaged state, using a trusted software module of the headset device, a user presence event; transitions, using the trusted software module of the headset device, the headset device from the sensor lock engaged state to a sensor lock disengaged state, the transitioning comprising providing power to a privacy sensitive sensor of the headset device and powering on an indicator light of the headset device; and transitions, using the trusted software module of the headset device, the headset device from the sensor lock disengaged state to a sensor lock engaged state, the transitioning comprising removing power from a privacy sensitive sensor of the headset device and powering off the indicator light of the headset device.

### SUMMARY

Some embodiments of the present disclosure provide a computer-implemented method for a sensor lock feature for mixed reality headsets. The method includes detecting, when a headset device is in a sensor lock engaged state, using a trusted software module of the headset device, a user presence event; transitioning, using the trusted software module of the headset device, the headset device from the sensor lock engaged state to a sensor lock disengaged state, the transitioning comprising providing power to a privacy sensitive sensor of the headset device and powering on an indicator light of the headset device; and transitioning, using the trusted software module of the headset device, the headset device from the sensor lock disengaged state to the sensor lock engaged state, the transitioning comprising removing power from the privacy sensitive sensor of the headset device and powering off the indicator light of the headset device. Thus, an embodiment provides a sensor lock feature for mixed reality headsets.

In an embodiment, the user presence event comprises a headset don detection event detected using a sensor in the headset device designated as not a privacy sensitive sensor. Thus, an embodiment provides more detail of the user presence event.

In an embodiment, the user presence event comprises a headset device button press. Thus, an embodiment provides more detail of the user presence event.

In an embodiment, the user presence event comprises a signed power-on message from a core processing component, the core processing component communicatively coupled to the headset device, the signed power-on message generated by a trusted software module of the core processing component in response to detecting a core processing component power button press. Thus, an embodiment provides more detail of the user presence event when a headset device is sued with a core processing component.

In an embodiment, transitioning the headset device from the sensor lock disengaged state to the sensor lock engaged state is performed in response to receiving a signed power status message from the core processing component. Thus, an embodiment provides more detail of use of a headset device with a core processing component.

In an embodiment, the core processing component is communicatively coupled to the headset device via a removable tether. Thus, an embodiment provides more detail of use of a headset device with a core processing component.

In an embodiment, the core processing component is communicatively coupled to the headset device via a wireless communications link. Thus, an embodiment provides more detail of use of a headset device with a core processing component.

In an embodiment, transitioning the headset device from the sensor lock disengaged state to the sensor lock engaged state is performed in response to a doff detection event. Thus, an embodiment provides more detail of transitioning to the sensor lock engaged state.

Some embodiments of the present disclosure provide a non-transitory computer-readable medium storing a program for a sensor lock feature for mixed reality headsets. The program, when executed by a computer, configures the computer to perform the foregoing method, where applicable in association with and operably on a headset device. Features of embodiments of the non-transitory computer-readable medium will be understood by analogy.

Some embodiments of the present disclosure provide a non-transitory computer-readable medium storing a program for a sensor lock feature for mixed reality headsets which, when executed by a computer, configures the computer to detect, when a headset device is in a sensor lock engaged state, using a trusted software module of the headset device, a user presence event; transition, using the trusted software module of the headset device, the headset device from the sensor lock engaged state to a sensor lock disengaged state, the transitioning comprising providing power to a privacy sensitive sensor of the headset device and powering on an indicator light of the headset device; and transition, using the trusted software module of the headset device, the headset device from the sensor lock disengaged state to the sensor lock engaged state, the transitioning comprising removing power from the privacy sensitive sensor of the headset device and powering off the indicator light of the headset device.

In an embodiment, the user presence event comprises a headset don detection event detected using a sensor in the headset device designated as not a privacy sensitive sensor.

In an embodiment, the user presence event comprises a headset don detection event comprises a headset device button press.

In an embodiment, the user presence event comprises a signed power-on message from a core processing component, the core processing component communicatively coupled to the headset device, the signed power-on message generated by a trusted software module of the core processing component in response to detecting a core processing component power button press.

In an embodiment, transitioning the headset device from the sensor lock disengaged state to the sensor lock engaged state is performed in response to receiving a signed power status message from the core processing component.

In an embodiment, the core processing component is communicatively coupled to the headset device via a removable tether.

In an embodiment, the core processing component is communicatively coupled to the headset device via a wireless communications link.

In an embodiment, transitioning the headset device from the sensor lock disengaged state to the sensor lock engaged state is performed in response to a doff detection event.

Some embodiments of the present disclosure provide a system for a sensor lock feature for mixed reality headsets. The system comprises a processor and a non-transitory computer readable medium storing a set of instructions, which when executed by the processor, cause the system to perform the foregoing method and in particular configure the processor to perform steps of the foregoing method, where applicable in association with and operably on a headset device. The system may further comprise a headset. Features of embodiments of the non-transitory computer-readable medium will be understood by analogy.

Some embodiments of the present disclosure provide a system for a sensor lock feature for mixed reality headsets. The system comprises a processor and a non-transitory computer readable medium storing a set of instructions, which when executed by the processor, configure the processor to detect, when a headset device is in a sensor lock engaged state, using a trusted software module of the headset device, a user presence event; transition, using the trusted software module of the headset device, the headset device from the sensor lock engaged state to a sensor lock disengaged state, the transitioning comprising providing power to a privacy sensitive sensor of the headset device and powering on an indicator light of the headset device; and transition, using the trusted software module of the headset device, the headset device from the sensor lock disengaged state to the sensor lock engaged state, the transitioning comprising removing power from the privacy sensitive sensor of the headset device and powering off the indicator light of the headset device.

In an embodiment, the user presence event comprises a headset don detection event detected using a sensor in the headset device designated as not a privacy sensitive sensor.

In an embodiment, the user presence event comprises a headset device button press.

In an embodiment, the user presence event comprises a signed power-on message from a core processing component, the core processing component communicatively coupled to the headset device, the signed power-on message generated by a trusted software module of the core processing component in response to detecting a core processing component power button press.

Features described herein in respect of embodiments of the method, the computer-readable medium or the system, will be understood where technically feasible to be applicable to all aspects of the invention.

### BRIEF DESCRIPTION OF THE DRAWINGS

The accompanying drawings, which are included to provide further understanding and are incorporated in and constitute a part of this specification, illustrate disclosed embodiments and together with the description serve to explain the principles of the disclosed embodiments.
FIG. 1 illustrates a network architecture used to implement a sensor lock feature for mixed reality headsets, according to some embodiments.
FIG. 2 is a block diagram illustrating details of a system for a sensor lock feature for mixed reality headsets, according to some embodiments.
FIG. 3 depicts diagrams illustrating an example configuration for a mixed reality headset for use in a sensor lock feature for mixed reality headsets, according to some embodiments.
FIG. 4 depicts block diagrams of an example configuration for a sensor lock feature for mixed reality headsets, in accordance with an illustrative embodiment.
FIG. 5 depicts example states of a sensor lock feature for mixed reality headsets, in accordance with an illustrative embodiment.
FIG. 6 depicts example states of a sensor lock feature for mixed reality headsets, in accordance with an illustrative embodiment.
FIG. 7 depicts a flowchart of an example process for a sensor lock feature for mixed reality headsets. in accordance with an illustrative embodiment.
FIG. 8 depicts example states of a sensor lock feature for mixed reality headsets, in accordance with an illustrative embodiment.
FIG. 9 depicts an example configuration of software modules implementing example states of a sensor lock feature for mixed reality headsets, in accordance with an illustrative embodiment.
FIG. 10 depicts a flowchart of another example process for a sensor lock feature for mixed reality headsets. in accordance with an illustrative embodiment.

In one or more implementations, not all of the depicted components in each figure may be required, and one or more implementations may include additional components not shown in a figure. Variations in the arrangement and type of the components may be made without departing from the scope of the subject disclosure. Additional components, different components, or fewer components may be utilized within the scope of the subject disclosure.

### DETAILED DESCRIPTION

In the following detailed description, numerous specific details are set forth to provide a full understanding of the present disclosure. It will be apparent, however, to one ordinarily skilled in the art, that the embodiments of the present disclosure may be practiced without some of these specific details. In other instances, well-known structures and techniques have not been shown in detail so as not to obscure the disclosure.

MR headsets typically include a plurality of sensors. An MR headset user typically enables one or more of the sensors, either manually (e.g., by selecting a sensor via a user interface) or automatically (e.g., when the user dons, or puts on, the headset). An MR headset user typically disables one or more of the sensors, either manually (e.g., by selecting a sensor via a user interface) or automatically (e.g., when the user doffs, or takes off, the headset). There is a chance that a sensor could be enabled without a user's knowledge or consent - for example via malware or false triggering of one or more sensors used to determine user proximity - which is an undesirable user experience. Thus, there is a need for a sensor lock feature that cuts off power to one or more headset sensors, so the sensors to which power is cut off can never be on when the user does not expect them to be, such as when the headset is not in use.

Embodiments of the present disclosure address the above identified problems by implementing a sensor lock feature for mixed reality headsets. In particular, an embodiment detects, when a headset device is in a sensor lock engaged state, using a trusted software module of the headset device, a user presence event; transitions, using the trusted software module of the headset device, the headset device from the sensor lock engaged state to a sensor lock disengaged state, the transitioning comprising providing power to a privacy sensitive sensor of the headset device and powering on an indicator light of the headset device; and transitions, using the trusted software module of the headset device, the headset device from the sensor lock disengaged state to a sensor lock engaged state, the transitioning comprising removing power from a privacy sensitive sensor of the headset device and powering off the indicator light of the headset device.

Some MR headset implementations include a head-mounted device (HMD) and a separate core processing component. The HMD and core processing component are communicatively coupled via a detachable or non-detachable wired connection (also referred to as a tether) or a wireless connection. Other MR headset implementations include only an HMD. An HMD typically includes one or more privacy sensitive sensors, i.e., sensors that could be used to compromise a user's privacy. Some non-limiting examples of a sensor designated as a privacy sensitive sensor are a color or monochrome camera, a microphone, and an ultrasonic sensor. Some non-limiting examples of a sensor or sensor system designated as not a privacy sensitive sensor are a flicker sensor, a sensor used to measure a user's Interpupillary Distance (IPD - the distance in millimeters between the centers of the pupils of the eyes, used in performing interaxial adjustment of the headset for visual clarity and comfort when using the headset), a capsense sensor, a simultaneous localization and mapping (SLAM) inertial measurement unit (IMU), a display IMU, a hinge or arm position sensor (used to determine whether the arms of a HMD are open or closed), a proximity sensor (used to determine a HMD's distance to a user), an eye-tracking camera or other sensor, and the like. Capsense refers to a technology that measures changes in the perceived capacitance of one or more electrodes, used to detect distinct variations in capacitance, which serve as input signals to determine whether a human is in close proximity to (e.g., touching) a device service to help determine whether a user is currently wearing a device. SLAM allows a headset to create real-time tracking and mapping of objects into a virtual space, helping track the headset position in 6 degrees of freedom (3D position and 3D rotation) and allowing creation of a spatial map for boundaries so users will know when they are close to hitting a wall or an object. An IMU is an electronic sensor package that measures motion and orientation, allowing measurement of the linear acceleration and rotational velocity of the headset when a user moves their head in all cardinal directions (e.g., when a user turns, tilts, or nods their head). This data can then be used as one of the components of user detection. The data is also useful in augmenting the tracking data for the location of the headset when tracking objects or boundaries. A display IMU is a specialized inertial measurement unit mounted directly on the display or optical modules. The display IMU is mounted on a movable module and tracks the module's motion relative to the headset. While the main headset IMU can be used for SLAM tracking and pose prediction, the display IMU can be used for display calibration and disparity correction. This helps to add clarity between the left and right display of a headset. These corrections are used to prevent eye strain and reduce motion sickness for users.

MR headset implementations typically include an on/off switch or power button and one or more electronic components such as processors or light projectors (e.g., LEDs). If used, a core processing component also typically includes an on/off switch or power button and one or more electronic components such as processors or light projectors (e.g., LEDs). Some HMD implementations used with a core processing component do not have their own power on/off control but do have physical volume up/down controls.

In some MR headset implementations including an HMD and a separate core processing component, software in the HMD is considered trusted and software in the core processing component is implemented in two portions: a trusted portion and an untrusted portion. In some MR headset implementations including only an HMD, all HMD software is considered trusted. In some MR headset implementations including only an HMD, software in the HMD is implemented in a trusted portion and an untrusted portion.

In some embodiments, a user can put an HMD into a low power state (e.g. standby/sleep) via a short press of the HMD's power button, or device inactivity will trigger the HMD to enter a low power state. Once the HMD has entered the low power state, the sensors turn off and an indicator light (e.g., a privacy LED) turns off, informing the user that device sensors (including one or more privacy sensitive sensors) are not active.

Some embodiments in MR headsets have multiple wakeup sources that will bring the device out of a low power state when triggered. This trigger wakes the HMD and turns on one or more privacy sensitive sensors to minimize the time to the user being able to interact with the HMD. The wakeup signal does not need to be based on a clear user action, and as a result, HMD sensors can be activated without user intent. When the device exits the lower power state an indicator light (e.g., a privacy LED) turns on, informing the user that device sensors (including one or more privacy sensitive sensors) are active.

In some embodiments, a user will need to opt-in to sensor lock functionality from a control in the HMD's settings menu. With sensor lock functionality enabled, when a user dons a headset from a sleep state, the display will not auto-wake and the user will need to provide some affirmative input (e.g., press the power button) to wake the device and enable one or more device sensors. Once the user provides that affirmative input (e.g., presses the power button), the user is loaded into their home environment, and an indicator light (e.g., a privacy LED) turns on. It is expected that users will develop "muscle memory" and initiate the affirmative input during the process of donning the headset.

In some other embodiments, sensor lock functionality is enabled by default. In an HMD without a proximity sensor and auto wake functionality, the user experience is the same regardless of whether sensor lock is on or off. When a user dons their headset from a sleep state, the user needs to provide some affirmative input (e.g., press the power button) to wake the device and enable one or more device sensors. Once the user provides that affirmative input (e.g., presses the power button), the user is loaded into their home environment, and an indicator light (e.g., a privacy LED) turns on.

In the sensor lock engaged state, a trusted software module of a headset device prevents power from reaching one or more privacy sensitive sensors of the headset device. Other software executing in the headset device or a core processing component cannot enable any privacy sensitive sensors in the sensor lock engaged state. While in the **sensor** lock disengaged state, software executing in the headset device or a core processing component can individually enable or disable any privacy sensitive sensors.

When a headset device is in the sensor lock engaged state, an embodiment executing in a trusted software module of the headset device detects a user presence event. In some embodiments, a user presence event is a headset don detection event detected using a sensor in the headset device designated as not a privacy sensitive sensor. For example, a proximity sensor might be used to detect a proximity of an arm of the headset device to a user's ear or temple, or a hinge position sensor might be used to detect whether both arms of the headset device are above a predetermined number of degrees from the zero-degree (i.e., closed) position and hence considered open, or a combination of sensors designated as not privacy sensitive sensors might be used to detect that the headset device is in a configuration consistent with being donned by a user. In some embodiments, a user presence event is a button press of a button in the headset device (e.g., an audio volume +/control, a power on/off button, or moving a power switch to the "on" position. In some embodiments, a user presence event is a signed power-on message from a core processing component. The core processing component is communicatively coupled to the headset device and the signed power-on message generated by a trusted software module of the core processing component in response to detecting a button press of a button in the core processing component (e.g., a power button press).

Subsequent to detecting a user presence event while in the sensor lock engaged state, an embodiment executing in a trusted software module of the headset device transitions the headset device from the sensor lock engaged state to a sensor lock disengaged state. Transitioning to the sensor lock disengaged state includes providing power to a privacy sensitive sensor of the headset device and powering on an indicator light of the headset device.

An embodiment executing in a trusted software module of the headset device transitions the headset device from the sensor lock disengaged state to a sensor lock engaged state. Transitioning to the sensor lock engaged state includes removing power from a privacy sensitive sensor of the headset device and powering off the indicator light of the headset device. In some embodiments, transitioning the headset device from the sensor lock disengaged state to the sensor lock engaged state is performed in response to a doff detection event. For example, a camera might be used to detect that a user's eye is no longer in a position consistent with the headset being worn, a lack of user activity within a predetermined time period might have been detected, the headset device or core processing component might have entered or been commanded to enter a low power state, a proximity sensor might be used to detect a lack of proximity of an arm of the headset device to a user's ear or temple, a hinge position sensor might be used to detect whether both arms of the headset device are below a predetermined number of degrees from the zero-degree (i.e., closed) position and hence considered closed, a combination of sensors might be used to detect that the headset device is in a configuration consistent with having been doffed by a user, or another event might have occurred. In some embodiments, transitioning the headset device from the sensor lock disengaged state to the sensor lock engaged state is performed in response to a command from a core processing component.

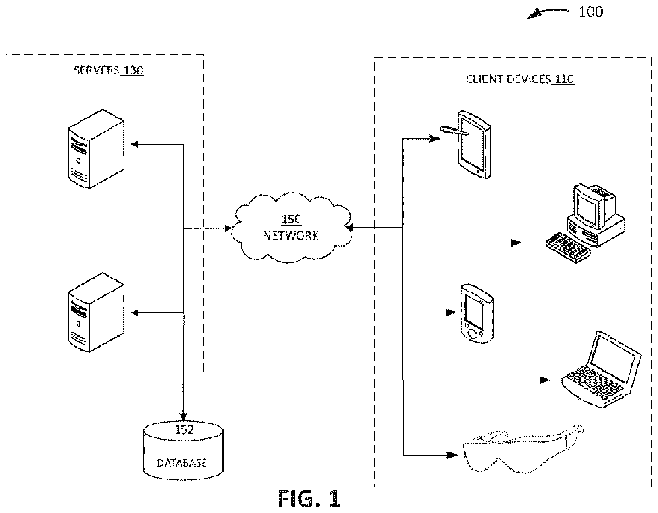

FIG. 1 illustrates a network architecture 100 used to implement a sensor lock feature for mixed reality headsets, according to some embodiments. The network architecture 100 may include one or more client devices 110 and servers 130, communicatively coupled via a network 150 with each other and to at least one database 152. Database 152 may store data and files associated with the servers 130 and/or the client devices 110. In some embodiments, client devices 110 collect data, video, images, and the like, for upload to the servers 130 to store in the database 152.

The network 150 may include a wired network (e.g., fiber optics, copper wire, telephone lines, and the like) and/or a wireless network (e.g., a satellite network, a cellular network, a radiofrequency (RF) network, Wi-Fi, Bluetooth, and the like). The network 150 may further include one or more of a local area network (LAN), a wide area network (WAN), the Internet, and the like. Further, the network 150 may include, but is not limited to, any one or more of the following network topologies, including a bus network, a star network, a ring network, a mesh network, and the like.

Client devices 110 may include, but are not limited to, laptop computers, desktop computers, and mobile devices such as smart phones, tablets, televisions, wearable devices, head-mounted devices, display devices, and the like.

In some embodiments, the servers 130 may be a cloud server or a group of cloud servers. In other embodiments, some or all of the servers 130 may not be cloud-based servers (i.e., may be implemented outside of a cloud computing environment, including but not limited to an on-premises environment), or may be partially cloud-based. Some or all of the servers 130 may be part of a cloud computing server, including but not limited to rack-mounted computing devices and panels. Such panels may include but are not limited to processing boards, switchboards, routers, and other network devices. In some embodiments, the servers 130 may include the client devices 110 as well, such that they are peers.

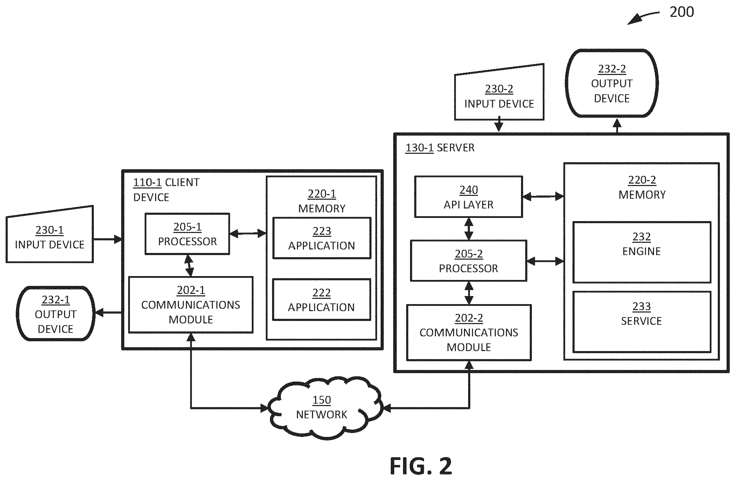

FIG. 2 is a block diagram illustrating details of a system 200 for a sensor lock feature for mixed reality headsets, according to some embodiments. Specifically, the example of FIG. 2 illustrates an exemplary client device 110-1 (of the client devices 110) and an exemplary server 130-1 (of the servers 130) in the network architecture 100 of FIG. 1.

Client device 110-1 and server 130-1 are communicatively coupled over network 150 via respective communications modules 202-1 and 202-2 (hereinafter, collectively referred to as "communications modules 202"). Communications modules 202 are configured to interface with network 150 to send and receive information, such as requests, data, messages, commands, and the like, to other devices on the network 150. Communications modules 202 can be, for example, modems or Ethernet cards, and/or may include radio hardware and software for wireless communications (e.g., via electromagnetic radiation, such as radiofrequency (RF), near field communications (NFC), Wi-Fi, and Bluetooth radio technology).

The client device 110-1 and server 130-1 also include a processor 205-1, 205-2 and memory 220-1, 220-2, respectively. Processors 205-1 and 205-2, and memories 220-1 and 220-2 will be collectively referred to, hereinafter, as "processors 205," and "memories 220." Processors 205 may be configured to execute instructions stored in memories 220, to cause client device 110-1 and/or server 130-1 to perform methods and operations consistent with embodiments of the present disclosure.

The client device 110-1 and the server 130-1 are each coupled to at least one input device 230-1 and input device 230-2, respectively (hereinafter, collectively referred to as "input devices 230"). The input devices 230 can include a mouse, a controller, a keyboard, a pointer, a stylus, a touchscreen, a microphone, voice recognition software, a joystick, a virtual joystick, a touch-screen display, and the like. In some embodiments, the input devices 230 may include cameras, microphones, sensors, and the like. In some embodiments, the sensors may include touch sensors, acoustic sensors, inertial motion units and the like.

In further examples, input devices 230 may include biometric components, motion components, environmental components, or position components, among a wide array of other components. For example, the biometric components include components to detect expressions (e.g., hand expressions, facial expressions, vocal expressions, body gestures, or eye-tracking), measure biosignals (e.g., blood pressure, heart rate, body temperature, perspiration, or brain waves), identify a person (e.g., voice identification, retinal identification, facial identification, fingerprint identification, or electroencephalogram-based identification), and the like. The biometric components may include a brain-machine interface (BMI) system that allows communication between the brain and an external device or machine. This may be achieved by recording brain activity data, translating this data into a format that can be understood by a computer, and then using the resulting signals to control the device or machine.

Example types of BMI technologies include electroencephalography (EEG) based BMIs, which record electrical activity in the brain using electrodes placed on the scalp; invasive BMIs, which use electrodes that are surgically implanted into the brain; and optogenetics BMIs, which use light to control the activity of specific nerve cells in the brain.

Any biometric data collected by the biometric components is captured and stored only with user approval and deleted on user request. Further, such biometric data may be used for very limited purposes, such as identification verification. To ensure limited and authorized use of biometric information and other personally identifiable information (PII), access to this data is restricted to authorized personnel only, if at all. Any use of biometric data may strictly be limited to identification verification purposes, and the data is not shared or sold to any third party without the explicit consent of the user. In addition, appropriate technical and organizational measures are implemented to ensure the security and confidentiality of this sensitive information.

The client device 110-1 and the server 130-1 are also coupled to at least one output device 232-1 and output device 232-2, respectively (hereinafter, collectively referred to as "output devices 232"). The output devices 232 may include a screen, a display (e.g., a same touchscreen display used as an input device), a speaker, an alarm, and the like. A user may interact with client device 110-1 and/or server 130-1 via the input devices 230 and the output devices 232.

Memory 220-1 may further include an application 222, configured to execute on client device 110-1 and couple with input device 230-1 and output device 232-1, and implement a sensor lock feature for mixed reality headsets. The application 222 may be downloaded by the user from server 130-1, and/or may be hosted by server 130-1. The application 222 may include specific instructions which, when executed by processor 205-1, cause operations to be performed consistent with embodiments of the present disclosure. In some embodiments, the application 222 runs on an operating system (OS) installed in client device 110-1. In some embodiments, application 222 may run within a web browser. In some embodiments, the processor 205-1 is configured to control a graphical user interface (GUI) (e.g., spanning at least a portion of input devices 230 and output devices 232) for the user of client device 110-1 to access the server 130-1.

In some embodiments, memory 220-2 includes an application engine 232. The application engine 232 may be configured to perform methods and operations consistent with embodiments of the present disclosure. The application engine 232 may share or provide features and resources with the client device 110-1, including data, libraries, and/or applications retrieved with application engine 232 (e.g., application 222). The user may access the application engine 232 through the application 222. The application 222 may be installed in client device 110-1 by the application engine 232 and/or may execute scripts, routines, programs, applications, and the like provided by the application engine 232.

Memory 220-1 may further include an application 223, configured to execute in client device 110-1. The application 223 may communicate with service 233 in memory 220-2 to provide a sensor lock feature for mixed reality headsets. The application 223 may communicate with service 233 through API layer 240, for example.

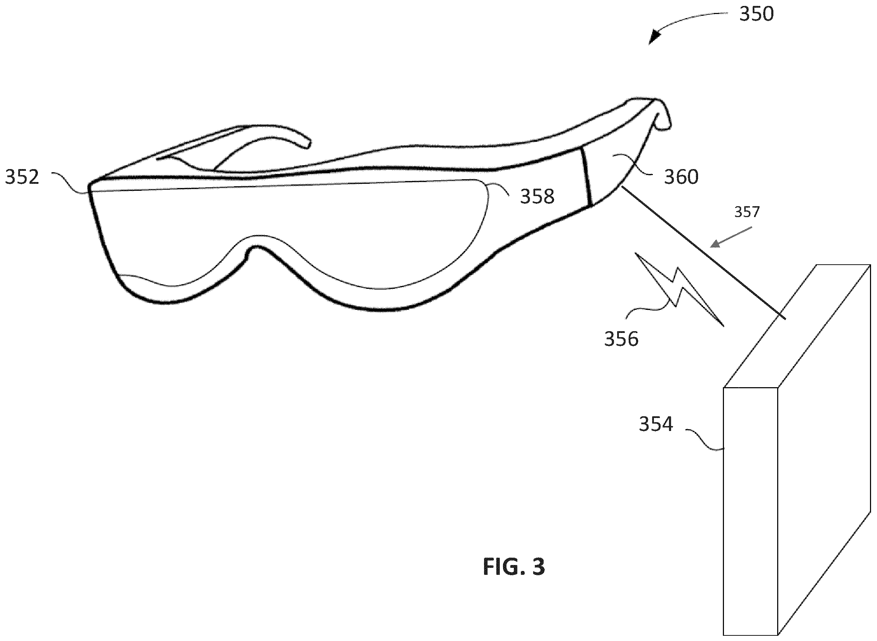

FIG. 3 depicts diagrams illustrating an example configuration for a mixed reality headset for use in a sensor lock feature for mixed reality headsets, according to some embodiments.

FIG. 3 depicts a mixed reality HMD system 350 which includes a mixed reality HMD 352 and a core processing component 354. The mixed reality HMD 352 and the core processing component 354 may communicate via a wireless connection (e.g., a 60 GHz link) as indicated by the link 356 or via a wired connection (e.g., a fixed or removable tether) as indicated by the link 357. In other implementations, the mixed reality system 350 includes a headset only, without an external compute device, or includes other wired or wireless connections between the mixed reality HMD 352 and the core processing component 354. HMD 352 may include an on/off switch or power button (not shown) and one or more electronic components such as processors or light projectors (e.g., LEDs). Core processing component 354 may include an on/off switch or power button (not shown) and one or more electronic components such as processors or light projectors (e.g., LEDs).

The mixed reality HMD 352 includes a pass-through display 358 and a frame 360. The frame 360 may house various electronic components (not shown) such as one or more light projectors (e.g., LASERs, LEDs, etc.), cameras, eye-tracking sensors, MEMS components, networking components, microphones, ultrasonic sensors, flicker sensors, distance or position detectors, inertial measurement units (IMUs), proximity sensors, hinge position sensors, and the like. The frame 360 or another part of the mixed reality HMD 352 may include an audio electronic component such as a speaker (not shown). The speaker may output audio from various audio sources, such as a phone call, VoIP session, or other audio channel. The electronic components may be configured to implement audio switching based on user gaming or XR interactions.

The projectors may be coupled to the pass-through display 358, e.g., via optical elements, to display media to a user. The optical elements may include one or more waveguide assemblies, reflectors, lenses, mirrors, collimators, gratings, etc., for directing light from the projectors to a user's eye. Image data may be transmitted from the core processing component 354 via link 356 or link 357 to HMD 352. Controllers in the HMD 352 may convert the image data into light pulses from the projectors, which may be transmitted via the optical elements as output light to the user's eye. The output light may mix with light that passes through the display 358, allowing the output light to present virtual objects that appear as if they exist in the real world.

The HMD system 350 may also include motion and position tracking units, cameras, light sources, etc., which allow the HMD system 350 to, e.g., track itself in 3DoF or 6DoF, track portions of the user (e.g., hands, feet, head, or other body parts), map virtual objects to appear as stationary as the HMD 352 moves, and have virtual objects react to gestures and other real-world objects. For example, the HMD system 350 may track the motion and position of the user's wrist movements as input gestures for performing XR navigation. As an example, the HMD system 350 may include a coordinate system to track the relative positions of various XR objects and elements in a shared artificial reality environment.

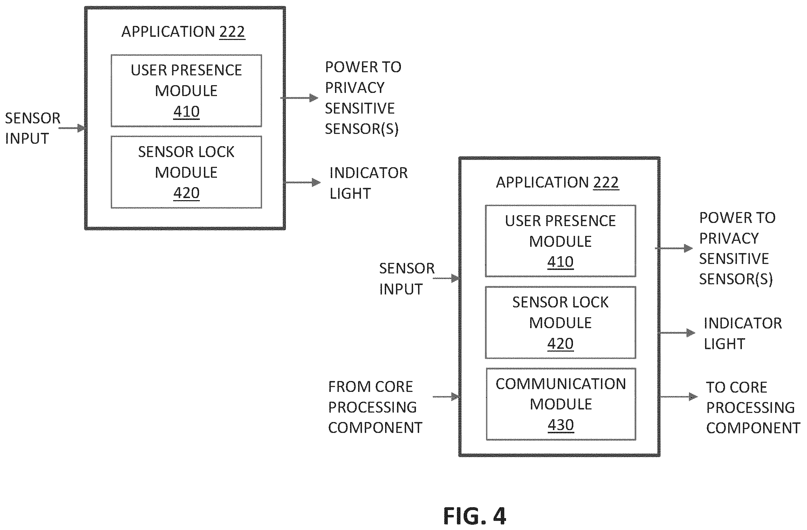

FIG. 4 depicts block diagrams of an example configuration for a sensor lock feature for mixed reality headsets, in accordance with an illustrative embodiment. Application 222 is the same as application 222 in FIG. 2.

When a headset device is in the sensor lock engaged state, user presence module 410 executing in a trusted software module of the headset device detects a user presence event. In some implementations of module 410, a user presence event is a headset don detection event detected using a sensor in the headset device designated as not a privacy sensitive sensor. For example, a proximity sensor might be used to detect a proximity of an arm of the headset device to a user's ear or temple, or a hinge position sensor might be used **to detect** whether both arms of the headset device are above a predetermined number of degrees from the zero-degree (i.e., closed) position and hence considered open, or a combination of sensors designated as not privacy sensitive sensors might be used to detect that the headset device is in a configuration consistent with being donned by a user. In some implementations of module 410, a user presence event is a button press of a button in the headset device (e.g., an audio volume +/- control, a power on/off button, or moving a power switch to the "on" position. In some implementations of module 410, a user presence event is a signed power-on message from a core processing component, received and processed by communication module 430. The core processing component is communicatively coupled to the headset device and the signed power-on message generated by a trusted software module of the core processing component in response to detecting a button press of a button in the core processing component (e.g., a power button press).

Subsequent to detecting a user presence event while in the sensor lock engaged state, sensor lock module 420 executing in a trusted software module of the headset device transitions the headset device from the sensor lock engaged state to a sensor lock disengaged state. Transitioning to the sensor lock disengaged state includes providing power to a privacy sensitive sensor of the headset device and powering on an indicator light of the headset device.

Sensor lock module 420 executing in a trusted software module of the headset device transitions the headset device from the sensor lock disengaged state to a sensor lock engaged state. Transitioning to the sensor lock engaged state includes removing power from a privacy sensitive sensor of the headset device and powering off the indicator light of the headset device. In some implementations of module 420, transitioning the headset device from the sensor lock disengaged state to the sensor lock engaged state is performed in response to a doff detection event. For example, a camera might be used to detect that a user's eye is no longer in a position consistent with the headset being worn, a lack of user activity within a predetermined time period might have been detected, the headset device or core processing component might have entered or been commanded to enter a low power state (received and processed by module 430), a proximity sensor might be used to detect a lack of proximity of an arm of the headset device to a user's ear or temple, a hinge position sensor might be used to detect whether both arms of the headset device are below a predetermined number of degrees from the zero-degree (i.e., closed) position and hence considered closed, a combination of sensors might be used to detect that the headset device is in a configuration consistent with having been doffed by a user, or another event might have occurred. In some implementations of module 420, transitioning the headset device from the sensor lock disengaged state to the sensor lock engaged state is performed in response to a command from a core processing component received and processed by module 430.

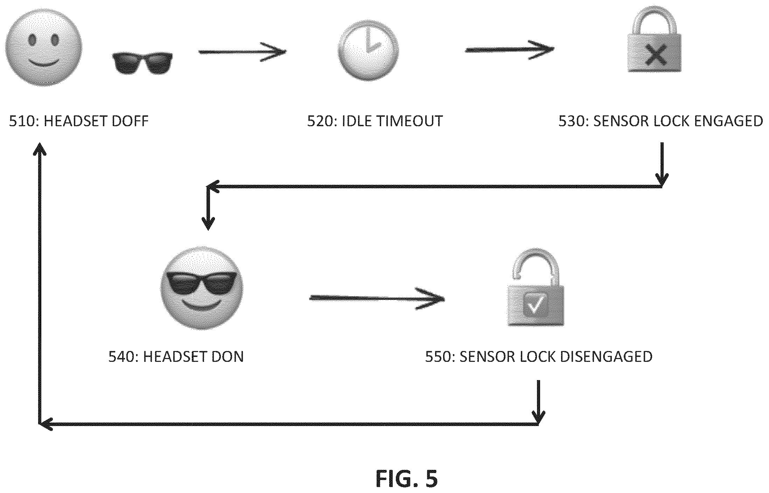

FIG. 5 depicts example states of a sensor lock feature for mixed reality headsets, in accordance with an illustrative embodiment.

In state 510, in the sensor lock disengaged state, a user doffs a headset device. After an idle timeout (state 520) expires, in state 530 the headset device transitions from the sensor lock disengaged state to the sensor lock engaged state. At a later time (state 540), the user dons the headset device, and in state 550 the headset device transitions from the sensor lock engaged state to the sensor lock disengaged state. Thereafter, the headset device returns to state 510 when the user doffs the headset device.

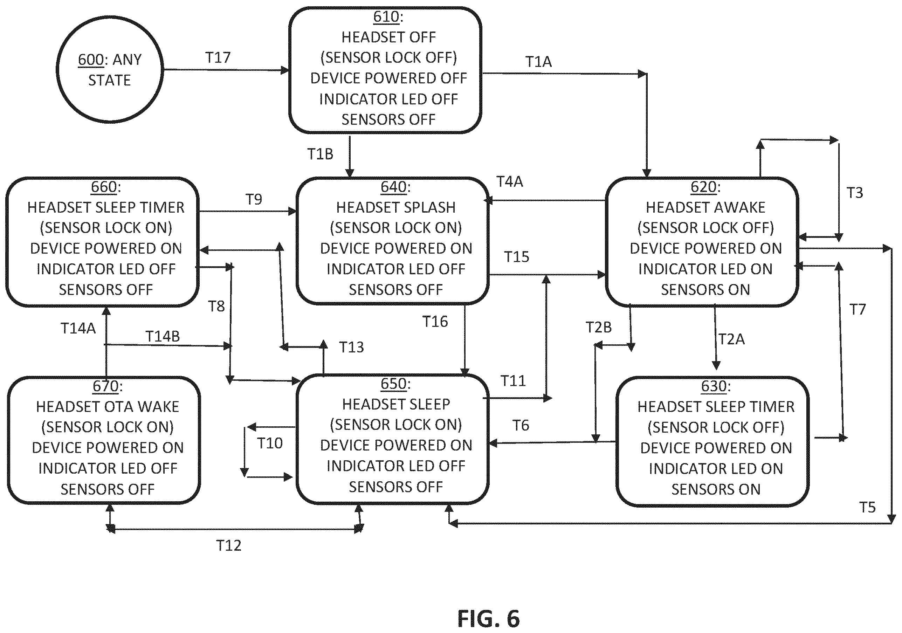

FIG. 6 depicts example states of a sensor lock feature for mixed reality headsets, in accordance with an illustrative embodiment.

In transition 17 (T17), upon a user selecting power off in the headset device's software or a long press of the headset device's power button (1-3 seconds), the headset device transitions from state 600 (any state) to state 610 (the headset device is off). From state 610, upon a long press of the headset device's power button (1-3 seconds), the headset device transitions (T1A) to state 620 (the headset device is awake and sensor lock is off, or disengaged) or (T1B) state 640 (the splash screen, i.e., a presentation to a user via a user interface asking for user confirmation, with sensor lock engaged) if the headset device's battery was depleted while not in use.

From state 620, upon doffing the headset in one embodiment, the headset device transitions (T2A) to state 630, in which the headset device starts a sleep timer, with sensor lock off. From state 620, upon the sleep timer expiring in another embodiment, the headset device transitions (T2B) to state 650 (the headset device is asleep, with sensor lock on). From state 620, upon the user selecting restart in software, the headset device transitions (T3) back to state 620 after a reboot of the headset device. From state 620, upon the user selecting a headset firmware update, if the update is available the headset device transitions (T4A) to state 640 and if no update is available the headset device remains in state 620. From state 620, upon a short press of the headset device's power button (approximately one second) the headset device transitions (T5) to state 650.

From state 630, upon expiration of the sleep timeout, the headset device transitions (T6) to state 650. From state 630, upon the user donning the headset device, the headset device transitions (T7) to state 620.

From state 640, upon a short press of the headset device's power button (approximately one second), the headset device transitions (T15) to state 620. From state 640, upon the user doffing the headset device or a sleep timeout expiring, the headset device transitions (T16) to state 650.

From state 650, upon a short press of the headset device's power button (approximately one second), the headset device transitions (T11) to state 620. From state 650, upon the user donning the headset device, the headset device remains (T10) in state 650. From state 650, upon a wake timer expiring, the headset device transitions (T12) to state 670, in which the headset device is awake and looking for an over-the-air (OTA) firmware update. If no firmware update is available, the headset device transitions back (T12) to state 650. From state 650, upon a headset reboot, the headset device transitions (T13) to state 660.

From state 660, upon the user donning the headset device, the headset device transitions (T9) to state 640. From state 660, upon the sleep timeout expiring, the headset device transitions (T8) to state 650.

From state 670, if there is a firmware update, the headset device reboots and transitions (T14A) to state 660. From state 670, if there is not a firmware update, the headset device transitions (T14B) to state 650.

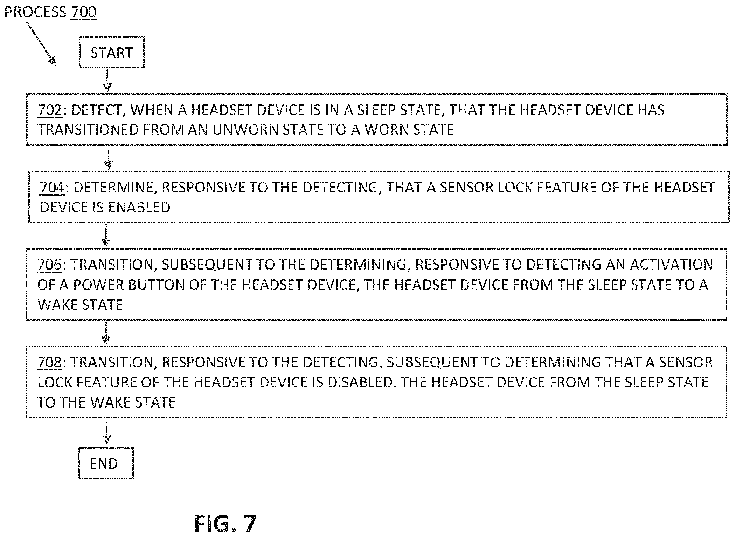

FIG. 7 depicts a flowchart of an example process for a sensor lock feature for mixed reality headsets. in accordance with an illustrative embodiment. Process 700 can be implemented in application 222 in FIG. 2.

At block 702, the process detects, when a headset device is in a sleep state, that the headset device has transitioned from an unworn state to a worn state. At block 704, the process determines, responsive to the detecting, that a sensor lock feature of the headset device is enabled. At block 706, the process transitions, subsequent to the determining, responsive to detecting an activation of a power button of the headset device, the headset device from the sleep state to a wake state. At block 708, the process transitions, responsive to the detecting, subsequent to determining that a sensor lock feature of the headset device is disabled. the headset device from the sleep state to the wake state. Then the process ends.

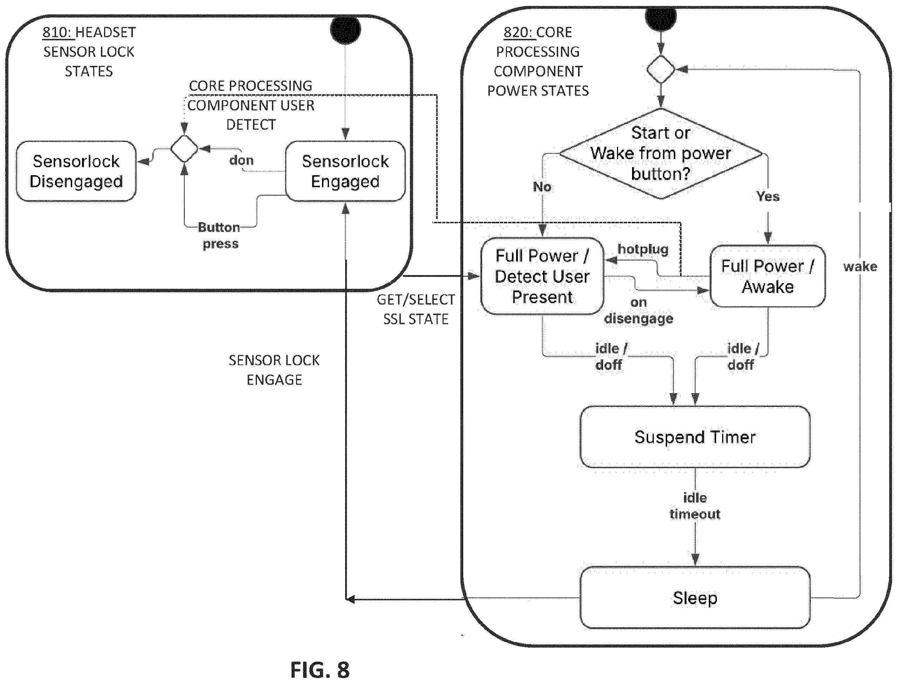

FIG. 8 depicts example states of a sensor lock feature for mixed reality headsets, in accordance with an illustrative embodiment.

In particular, FIG. 8 depicts examples states of a sensor lock feature in an embodiment where a headset device is communicatively coupled to a core processing component. 810 depicts headset device sensor lock states. 820 depicts core processing component states. On the headset device, the sensor lock status is managed by a trusted software module which has control over sensor power. The headset device always starts in the sensor lock engaged state and moves to the sensor lock disengaged state when don detection occurs (e.g., using one or more sensors designed as not privacy sensitive sensors, such as a proximity sensor and hinge detection), when a user presses a button (e.g., a volume +/- button) on the headset, or upon receipt of a signed message from the core processing component indicating detection of a user via a button press (e.g., a power button press) on the core processing component. The transition to the sensor lock engaged state happens when the core processing component enters a low-power, or sleep, mode. If this transition is untrusted because power management is implemented in an untrusted portion of the core processing component's software, an indicator light (e.g., a privacy LED) remains on for the entire time that the headset is in the sensor lock disengaged state.

Power state transitions on the core processing component interact with the sensor lock state machine. Thus, when the core processing component starts or is awakened by the user, the core processing component can use secondary user detection (primary user detection is the proximity and other sensors on the headset device) to disengage sensor lock. When the core processing component is awake, but sensor lock has not yet been disengaged, untrusted software of the core processing component presents a user interface so that the user can disengage sensor lock. The core processing component also conveys the power state to the headset device as a proxy for a user intent to not actively use the device and therefore engage sensor lock. In the "Full Power / Detect User Present" state on the core processing component, the core processing component polls the current sensor lock state. If sensor lock is already disengaged, the core processing component immediately transitions to the "Full Power / Awake" state without any user interface impact. If, instead, sensor lock is engaged, the core processing component presents a user interface that prompts the user to physically interact with the core processing component or headset device to trigger don detection, and the core processing component waits in this state until sensor lock on the headset device is disengaged. In the case when the core processing component is awake, but a don signal is not detected on the headset device, in one implementation the core processing component renders the display with a lock screen that prompts the user to press any button on the headset device or core processing component to unlock the device. In the case when the core processing component is awake, but a don signal is not detected on the headset device, in another implementation either the core processing component does not drive the display/backlight, or the headset device cuts off the voltage to the display/backlight, thus indirectly forcing the user to press any button to wake the devices.

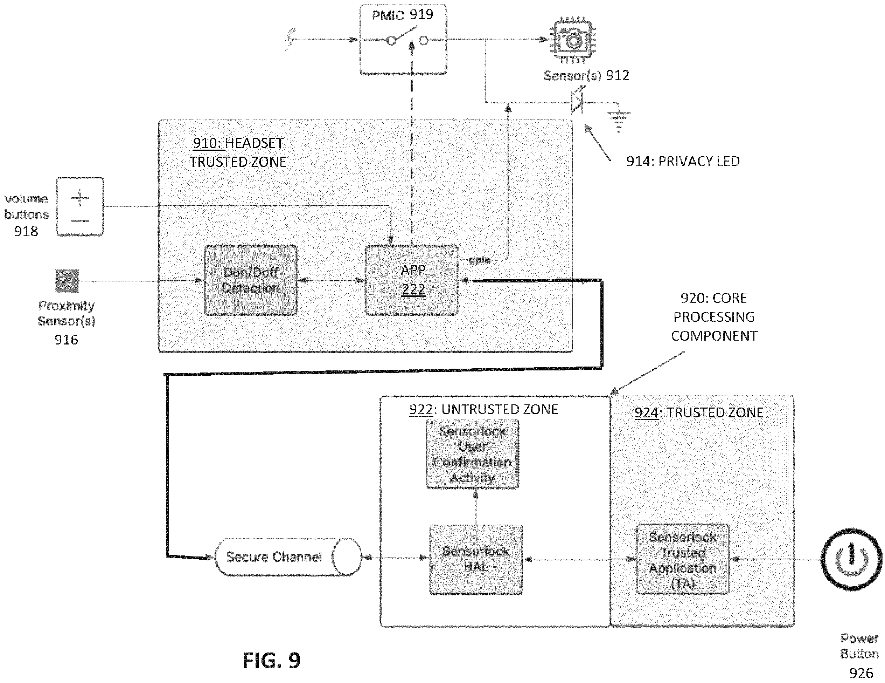

FIG. 9 depicts an example configuration of software modules implementing example states of a sensor lock feature for mixed reality headsets, in accordance with an illustrative embodiment. Application 222 is the same as application 222 in FIG. 2.

Executing within headset device trusted zone 910, application 222 receives don/doff detection events detected by one or proximity sensor(s) 916, receives button press events from volume buttons 918 and uses power management integrated circuit (PMIC) 919 to control one or more privacy sensitive sensor(s) 912 and illuminate privacy LED 914.

In particular, don/doff detection logic notifies application 222 of a change in don/doff state and responds to queries from application 222 for the current don/doff state. Application 222 manages sensor lock states, is the source of truth for the current sensor lock state, and is responsible for the feature's privacy guarantees. Application 222 implements the sensor lock state machine depicted in headset sensor lock states 810 in FIG. 8, derives a shared secret key using a presently available technique, receives and verifies tokens (using shared secret key) from core processing component 920 with intent to disengage or disable sensor lock (e.g., for hardware or software verification in a test environment), receives an intent to transition sensor lock to the engaged state from core processing component 920, and reports the current sensor lock state whenever the state changes, or when queried by core processing component 920.

Privacy LED 914 is used to indicate the on/off state of the privacy sensitive sensors 912 (e.g., a camera or microphone), as well as the sensor lock state. If any of the privacy-sensitive sensors 912 are on, privacy LED 914 must remain on with at least a predetermined minimum brightness level. Even if all of the privacy sensitive sensors 912 have been turned off (e.g., by another module of headset device software) but the sensor lock is in the disengaged state, privacy LED 914 remains on. Privacy LED 914 is not illuminated (i.e., off) when sensor lock is in the engaged state. Application 222 controls privacy LED 914 via a general purposed input/output (GPIO) to allow application 222 to activate privacy LED 914 even when power to privacy sensitive sensors 912 is cut off, for example, when sensor lock is disengaged or to implement user interface behavior like blinking, minimum on time, and the like.

Application 222 communicates with the sensor lock HAL, a software module executing in untrusted zone 922 of core processing component 920, via a secure communication channel. Because events originating from power button 926 are processed by a trusted software module (the sensor lock trusted application, executing in trusted 924 of core processing component 920), power button events are considered trusted events.

The sensor lock HAL is the main component on core processing component 920 that guides the sensor lock state machine. The sensor lock HAL is responsible for loading and initializing the sensor lock trusted application (TA) within trusted zone 924 of core processing component 920, querying the up-to-date sensor lock state from application 222 when required, receiving sensor lock state change notifications from application 222 and propagating the state change to upper layers without caching, detecting the power button press used to start/wake the system, and invoking the trust zone application programming interface (API) to get a signed token to be sent across the secure channel to application 222.

The sensor lock TA is responsible for deriving a shared secret key, using the shared secret key to sign messages (or tokens) that can be sent across the secure channel to application 222 for disengaging sensor lock, and verifying any messages received from application 222, if needed, by the sensor lock HAL. Note that tokens generated by the sensor lock TA should only be one-time usable, and must have a reasonable expiry duration. Otherwise, software executing in untrusted zone 922 could misuse the token to disengage sensor lock. One way to implement the expiry of signed tokens is to first request a nonce from application 222, which is then used to generate the signed token. Application 222 must verify the nonce in addition to verifying the signature of the token, and caches the nonce for a predetermined period of time.

The sensor lock UC activity module, a software module executing in untrusted zone 922 of core processing component 920, is a user interface component that prompts a user to interact with the headset device or core processing component with the goal of triggering don detection (e.g., using a confirmation screen). The sensor lock UC activity module receives sensor lock state change notifications from the sensor lock HAL, and activates (e.g., to prompt the user or consume power button presses) every time the sensor lock state transitions to the engaged state. The sensor lock UC activity module deactivates (goes into background) when sensor lock is disengaged. The sensor lock UC activity module also listens to hot plug events (i.e., the headset device and core processing component become connected to each other in a powered-on state), and queries the current sensor lock state to avoid waiting for state change notifications from the headset. The sensor lock UC activity module always queries the current sensor lock state from the headset before engaging with the user via a user interface. Should a bad actor compromise the sensor lock UC activity module, the bad actor could prevent the confirmation screen from appearing but could not disengage sensor lock.

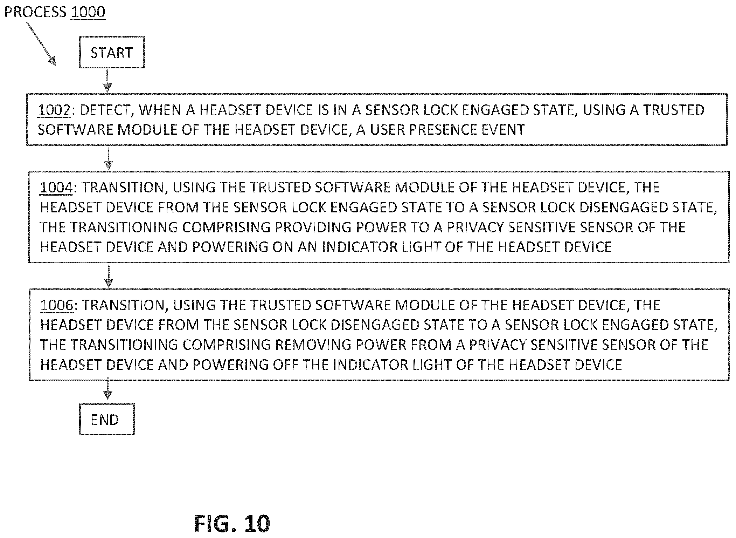

FIG. 10 depicts a flowchart of another example process for a sensor lock feature for mixed reality headsets. in accordance with an illustrative embodiment. Process 1000 can be implemented in application 222 in FIG. 2.

At block 1002, the process detects, when a headset device is in a sensor lock engaged state, using a trusted software module of the headset device, a user presence event. At block 1004, the process transitions, using the trusted software module of the headset device, the headset device from the sensor lock engaged state to a sensor lock disengaged state, the transitioning comprising providing power to a privacy sensitive sensor of the headset device and powering on an indicator light of the headset device. At block 1006, the process transitions, using the trusted software module of the headset device, the headset device from the sensor lock disengaged state to a sensor lock engaged state, the transitioning comprising removing power from a privacy sensitive sensor of the headset device and powering off the indicator light of the headset device. Then the process ends.

Many of the above-described features and applications may be implemented as software processes that are specified as a set of instructions recorded on a computer-readable storage medium (alternatively referred to as computer-readable media, machine-readable media, or machine-readable storage media). When these instructions are executed by one or more processing unit(s) (e.g., one or more processors, cores of processors, or other processing units), they cause the processing unit(s) to perform the actions indicated in the instructions. Examples of computer-readable media include, but are not limited to, RAM, ROM, read-only compact discs (CD-ROM), recordable compact discs (CD-R), rewritable compact discs (CD-RW), read-only digital versatile discs (e.g., DVD-ROM, dual-layer DVD-ROM), a variety of recordable/rewritable DVDs (e.g., DVD-RAM, DVD-RW, DVD+RW, etc.), flash memory (e.g., SD cards, mini-SD cards, micro-SD cards, etc.), magnetic and/or solid state hard drives, ultra-density optical discs, any other optical or magnetic media, and floppy disks. In one or more embodiments, the computer-readable media does not include carrier waves and electronic signals passing wirelessly or over wired connections, or any other ephemeral signals. For example, the computer-readable media may be entirely restricted to tangible, physical objects that store information in a form that is readable by a computer. In one or more embodiments, the computer-readable media is non-transitory computer-readable media, computer-readable storage media, or non-transitory computer-readable storage media.

In one or more embodiments, a computer program product (also known as a program, software, software application, script, or code) can be written in any form of programming language, including compiled or interpreted languages, declarative or procedural languages, and it can be deployed in any form, including as a standalone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

While the above discussion primarily refers to microprocessor or multi-core processors that execute software, one or more embodiments are performed by one or more integrated circuits, such as application specific integrated circuits (ASICs) or field programmable gate arrays (FPGAs). In one or more embodiments, such integrated circuits execute instructions that are stored on the circuit itself.

While this specification contains many specifics, these should not be construed as limitations on the scope of what may be claimed, but rather as descriptions of particular implementations of the subject matter. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Those of skill in the art would appreciate that the various illustrative blocks, modules, elements, components, methods, and algorithms described herein may be implemented as electronic hardware, computer software, or combinations of both. To illustrate this interchangeability of hardware and software, various illustrative blocks, modules, elements, components, methods, and algorithms have been described above generally in terms of their functionality. Whether such functionality is implemented as hardware or software depends upon the particular application and design constraints imposed on the overall system. Skilled artisans may implement the described functionality in varying ways for each particular application. Various components and blocks may be arranged differently (e.g., arranged in a different order, or partitioned in a different way), all without departing from the scope of the subject technology.

It is understood that any specific order or hierarchy of blocks in the processes disclosed is an illustration of example approaches. Based upon implementation preferences, it is understood that the specific order or hierarchy of blocks in the processes may be rearranged, or that not all illustrated blocks be performed. Any of the blocks may be performed simultaneously. In one or more embodiments, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

The subject technology is illustrated, for example, according to various aspects described above. The present disclosure is provided to enable any person skilled in the art to practice the various aspects described herein. The disclosure provides various examples of the subject technology, and the subject technology is not limited to these examples. Various modifications to these aspects will be readily apparent to those skilled in the art, and the generic principles defined herein may be applied to other aspects.

A reference to an element in the singular is not intended to mean "one and only one" unless specifically stated, but rather "one or more." Unless specifically stated otherwise, the term "some" refers to one or more. Pronouns in the masculine (e.g., his) include the feminine and neuter gender (e.g., her and its) and vice versa. Headings and subheadings, if any, are used for convenience only and do not limit the disclosure.

To the extent that the terms "include," "have," or the like is used in the description or the claims or clauses, such term is intended to be inclusive in a manner similar to the term "comprise" as "comprise" is interpreted when employed as a transitional word in a claim.

The word "exemplary" is used herein to mean "serving as an example, instance, or illustration." Any embodiment described herein as "exemplary" is not necessarily to be construed as preferred or advantageous over other embodiments. In one aspect, various alternative configurations and operations described herein may be considered to be at least equivalent.

As used herein, the phrase "at least one of" preceding a series of items, with the terms "and" or "or" to separate any of the items, modifies the list as a whole, rather than each member of the list (i.e., each item). The phrase "at least one of" does not require selection of at least one item; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

A phrase such as an "aspect" does not imply that such aspect is essential to the subject technology or that such aspect applies to all configurations of the subject technology. A disclosure relating to an aspect may apply to all configurations, or one or more configurations. An aspect may provide one or more examples. A phrase such as an aspect may refer to one or more aspects and vice versa. A phrase such as an "embodiment" does not imply that such embodiment is essential to the subject technology or that such embodiment applies to all configurations of the subject technology. A disclosure relating to an embodiment may apply to all embodiments, or one or more embodiments. An embodiment may provide one or more examples. A phrase such as an embodiment may refer to one or more embodiments and vice versa. A phrase such as a "configuration" does not imply that such configuration is essential to the subject technology or that such configuration applies to all configurations of the subject technology. A disclosure relating to a configuration may apply to all configurations, or one or more configurations. A configuration may provide one or more examples. A phrase such as a configuration may refer to one or more configurations and vice versa.

In one aspect, unless otherwise stated, all measurements, values, ratings, positions, magnitudes, sizes, and other specifications that are set forth in this specification, including in the claims or clauses that follow, are approximate, not exact. In one aspect, they are intended to have a reasonable range that is consistent with the functions to which they relate and with what is customary in the art to which they pertain. It is understood that some or all steps, operations, or processes may be performed automatically, without the intervention of a user.

Method claims or clauses may be provided to present elements of the various steps, operations, or processes in a sample order, and are not meant to be limited to the specific order or hierarchy presented.

In one aspect, a method may be an operation, an instruction, or a function and vice versa. In one aspect, a claim may be amended to include some or all of the words (e.g., instructions, operations, functions, or components) recited in other one or more claims, one or more words, one or more sentences, one or more phrases, one or more paragraphs, and/or one or more claims.

All structural and functional equivalents to the elements of the various configurations described throughout this disclosure that are known or later come to be known to those of ordinary skill in the art are expressly incorporated herein by reference and intended to be encompassed by the subject technology. Moreover, nothing disclosed herein is intended to be dedicated to the public regardless of whether such disclosure is explicitly recited in the above description. No claim element is to be construed under the provisions of 35 U.S.C. §112, sixth paragraph, unless the element is expressly recited using the phrase "means for" or, in the case of a method claim, the element is recited using the phrase "step for."

The Title, Background, and Brief Description of the Drawings of the disclosure are hereby incorporated into the disclosure and are provided as illustrative examples of the disclosure, not as restrictive descriptions. It is submitted with the understanding that they will not be used to limit the scope or meaning of the claims. In addition, in the Detailed Description, it can be seen that the description provides illustrative examples, and the various features are grouped together in various embodiments for the purpose of streamlining the disclosure. This method of disclosure is not to be interpreted as reflecting an intention that the included subject matter requires more features than are expressly recited in any claim. Rather, as the claims reflect, inventive subject matter lies in less than all features of a single disclosed configuration or operation. The claims are hereby incorporated into the Detailed Description, with each claim standing on its own to represent separately patentable subject matter.

The claims or clauses are not intended to be limited to the aspects described herein but are to be accorded the full scope consistent with the language of the claims and to encompass all legal equivalents. Notwithstanding, none of the claims are intended to embrace subject matter that fails to satisfy the requirement of 35 U.S.C. § 101, 102, or 103, nor should they be interpreted in such a way.

Embodiments consistent with the present disclosure may be combined with any combination of features or aspects of embodiments described herein.

## Claims

1. A computer-implemented method comprising:
detecting, when a headset device is in a sensor lock engaged state, using a trusted software module of the headset device, a user presence event;
transitioning, using the trusted software module of the headset device, the headset device from the sensor lock engaged state to a sensor lock disengaged state, the transitioning comprising providing power to a privacy sensitive sensor of the headset device and powering on an indicator light of the headset device; and
transitioning, using the trusted software module of the headset device, the headset device from the sensor lock disengaged state to the sensor lock engaged state, the transitioning comprising removing power from the privacy sensitive sensor of the headset device and powering off the indicator light of the headset device.

2. The computer-implemented method of claim 1, wherein the user presence event comprises a headset don detection event detected using a sensor in the headset device designated as not a privacy sensitive sensor.

3. The computer-implemented method of claim 1 or claim 2, wherein the user presence event comprises a headset device button press.

4. The computer-implemented method of any one of claims 1 to 3, wherein the user presence event comprises a signed power-on message from a core processing component, the core processing component communicatively coupled to the headset device, the signed power-on message generated by a trusted software module of the core processing component in response to detecting a core processing component power button press.

5. The computer-implemented method of claim 4, wherein transitioning the headset device from the sensor lock disengaged state to the sensor lock engaged state is performed in response to receiving a signed power status message from the core processing component.

6. The computer-implemented method of claim 4 or claim 5, wherein the core processing component is communicatively coupled to the headset device via a removable tether.

7. The computer-implemented method of any one of claims 4 to 6, wherein the core processing component is communicatively coupled to the headset device via a wireless communications link.

8. The computer-implemented method of any preceding claim, wherein transitioning the headset device from the sensor lock disengaged state to the sensor lock engaged state is performed in response to a doff detection event.

9. A non-transitory computer-readable medium storing a program, which when executed by a computer, configures the computer to:
detect, when a headset device is in a sensor lock engaged state, using a trusted software module of the headset device, a user presence event;
transition, using the trusted software module of the headset device, the headset device from the sensor lock engaged state to a sensor lock disengaged state, the transitioning comprising providing power to a privacy sensitive sensor of the headset device and powering on an indicator light of the headset device; and
transition, using the trusted software module of the headset device, the headset device from the sensor lock disengaged state to the sensor lock engaged state, the transitioning comprising removing power from the privacy sensitive sensor of the headset device and powering off the indicator light of the headset device.

10. The non-transitory computer-readable medium of claim 9, storing a program, which when executed by a computer, configures the computer further to perform the method of any one of claims 2 to 8.

11. A system comprising:
a processor; and
a non-transitory computer readable medium storing a set of instructions, which when executed by the processor, configure the system to:
detect, when a headset device is in a sensor lock engaged state, using a trusted software module of the headset device, a user presence event;
transition, using the trusted software module of the headset device, the headset device from the sensor lock engaged state to a sensor lock disengaged state, the transitioning comprising providing power to a privacy sensitive sensor of the headset device and powering on an indicator light of the headset device; and
transition, using the trusted software module of the headset device, the headset device from the sensor lock disengaged state to the sensor lock engaged state, the transitioning comprising removing power from the privacy sensitive sensor of the headset device and powering off the indicator light of the headset device.

12. The system of claim 11, wherein the computer readable medium stores a set of instructions, which when executed by the processor, configure the system further to perform the method of any one of claims 2 to 8.
